(19) Europäisches Patentamt
European Patent Office
Office européen des brevets

(11) **EP 3 051 325 B1**

(12) **EUROPÄISCHE PATENTSCHRIFT**

(45) Veröffentlichungstag und Bekanntmachung des Hinweises auf die Patenterteilung:
**12.07.2017   Patentblatt 2017/28**

(51) Int Cl.:
**G02B 17/08** (2006.01)       **G02B 5/00** (2006.01)

(21) Anmeldenummer: **15199557.8**

(22) Anmeldetag: **11.12.2015**

(54) **OPTISCHES ELEMENT ZUR FOKUSSIERUNG NÄHERUNGSWEISE KOLLIMIERTER STRAHLEN**

OPTICAL ELEMENT FOR FOCUSSING APPROXIMATIVELY COLLIMATED BEAMS

ÉLEMENT OPTIQUE DESTINE A LA MISE AU MOINS DE RAYONNEMENTS APPROXIMATIVEMENT COLLIMATES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2015   DE 102015201647**

(43) Veröffentlichungstag der Anmeldung:
**03.08.2016   Patentblatt 2016/31**

(73) Patentinhaber: **asphericon GmbH**
**07747 Jena (DE)**

(72) Erfinder:
• KIONTKE, Sven
  **07743 Jena (DE)**
• FUCHS, Ulrike, Dr.
  **07745 Jena (DE)**

(74) Vertreter: **Liedtke, Markus**
**Liedtke & Partner**
**Patentanwälte**
**Gerhart-Hauptmann-Straße 10/11**
**99096 Erfurt (DE)**

(56) Entgegenhaltungen:
**JP-A- 2000 206 411     US-A1- 2010 309 566**

**Beschreibung**

Die Erfindung betrifft ein einstückiges optisches Element zur Fokussierung näherungsweise kollimierter Strahlen nach dem Oberbegriff des Anspruchs 1.

Aus dem Stand der Technik sind optische Elemente zur Strahlfokussierung bekannt, die kollimierte Eingangsstrahlen um eine optische Achse in Ausgangsstrahlen brechen, die sich in einem Fokusbereich überlagern. Damit ist es möglich, eine vergleichsweise niedrige, aber über eine vergleichsweise weite Eintrittspupille verteilte mittlere Eintrittsbestrahlungsstärke in eine vergleichsweise höhere, aber in einem vergleichsweise engen Querschnitt des Fokusbereichs konzentrierte mittlere Austrittsbestrahlungsstärke zu wandeln.

Das Dokument US 2010/0309566 A1 beschreibt ein optisches System mit mindestens zwei Reflaxikons aus festem, lichtdurchlässigen Material. Jedes Reflaxikon weist eine innere kegelförmige Oberfläche sowie eine äußere kegelstumpfförmige Oberfläche auf, die zueinander entlang einer optischen Achse zentriert und reflektierend ausgebildet sind. Weitere Reflaxikons sind aus JP 2000 206411 A bekannt.

Aus dem Stand der Technik ist die Anwendung solcher optischer Elemente zur Strahlfokussierung bekannt, um nur innerhalb des Fokusbereichs eine Mindestbestrahlungsstärke zu überschreiten, oberhalb der gewisse physikalische Effekte wie Polymerisation, optischer Durchbruch oder ein Aufschmelzen fester Werkstoffe ausgelöst werden. Somit ist eine Bearbeitung von Werkstoffen oder biologischem Gewebe in einem durch den Fokusbereich relativ scharf begrenzten räumlichen Ausschnitt möglich.

Sowohl zur Erzielung besonders hoher Bestrahlungsstärken als auch für eine besonders präzise Bearbeitung sind optische Elemente vorteilhaft, mit denen ein Eingangsstrahlenbündel eines vorgegebenen Querschnitts auf einen besonders engen Fokusbereich fokussiert werden kann. Aus dem Stand der Technik sind hierfür beispielsweise asphärische Linsen bekannt, die unter Zugrundelegung der Gesetze der Strahlenoptik so geformt werden können, dass beliebige parallel zur optischen Achse verlaufende Eingangsstrahlen für Licht einer Wellenlänge in Ausgangsstrahlen gebrochen werden, die sich in einem Brennpunkt schneiden, der sich im Abstand der Brennweite von der austrittsseitigen Hauptebene der asphärischen Linse auf der optischen Achse befindet.

Unter Berücksichtigung wellenoptischer Effekte lässt sich jedoch auch mit derartigen asphärischen Linsen und auch für monochromatisches Licht kein Brennpunkt infinitesimal kleiner Ausdehnung erzielen, sondern lediglich ein Fokusbereich endlicher Ausdehnung, die üblicherweise mit dem Durchmesser des Airy-Scheibchens

$$d_{Airy} = 1,22 \cdot \frac{\lambda}{n \cdot \sin(\alpha)}$$

angegeben wird, wobei $\lambda$ die Wellenlänge des monochromatischen Lichts, $n$ die Brechzahl des die Linse umgebenden Mediums und $\alpha$ den halben austrittsseitigen Öffnungswinkel der asphärischen Linse bezeichnet.

Anordnungen und Verfahren nach dem Stand der Technik verringern die Ausdehnung des Fokusbereichs durch eine Vergrößerung der numerischen Apertur. Bei gleichbleibendem Querschnitt der Eintrittspupille kann eine Vergrößerung der numerischen Apertur nach dem Stand der Technik durch Verringerung der Brennweite, und somit auch Verringerung des Arbeitsabstands zwischen der Frontfläche der Linse und dem zu bearbeitenden Material, bewirkt werden. Nach dem Stand der Technik kann eine Vergrößerung der numerischen Apertur auch durch Verwendung einer Immersionsflüssigkeit zwischen der Linse und dem zu bearbeitenden Material, die eine höhere Brechzahl als Luft aufweist, bewirkt werden.

Der Erfindung liegt die Aufgabe zu Grunde, ein optisches Element zur Fokussierung von näherungsweise kollimiertem, über eine Eintrittspupille vorgegebenen Durchmessers verteiltem Licht anzugeben, mit dem ein engerer Fokusbereich und/oder ein größerer Arbeitsabstand und/oder eine bessere Beweglichkeit relativ zu einem zu bearbeitenden Material erzielt werden kann als mit Anordnungen nach dem Stand der Technik und das eine kompakte, Platz sparende Bauform aufweist und bei welchem eine Justierung nach der Fertigung des optischen Elements entfällt oder vereinfacht wird. Der Erfindung liegt zudem die Aufgabe zu Grunde, ein Verfahren zur Anwendung eines solchen optischen Elements und eine Anordnung zur Durchführung eines solchen Verfahrens anzugeben.

Die Aufgabe wird hinsichtlich des optischen Elements erfindungsgemäß durch die im Anspruch 1 angegebenen Merkmale gelöst. Die Aufgabe wird hinsichtlich des Verfahrens zur Anwendung des optischen Elements durch die im Anspruch 6 angegebenen Merkmale gelöst.

Vorteilhafte Ausgestaltungen der Erfindung sind Gegenstand der Unteransprüche.

Ein einstückiges optisches Element zur Fokussierung eines Eintrittsbündels näherungsweise kollimierter Strahlen um eine optische Achse in einem Fokusbereich ist eintrittsseitig durch einen zur optischen Achse zentrierten Kegelstumpf mit zum Lichteintritt weisender Deckfläche sowie austrittsseitig durch einen Kegel mit zum Lichtaustritt weisender Kegelspitze auf der optischen Achse, um welchen eine rotationssymmetrische asphärische Grenzfläche angeordnet ist, begrenzt. Der Kegel ist als Ergänzungskegel zum Kegelstumpf ausgebildet. Die asphärische Grenzfläche ist als Teilfläche der konvexen Fläche einer plankonvexen asphärischen Sammellinse mit einem hinter dem Lichtaustritt des optischen Elements angeordneten Brennpunkt auf der optischen Achse ausgebildet. Das optische Element ist aus optisch durchlässigem Material gefertigt. Die Mantelflächen des Kegelstumpfs und des Kegels sind nach innen reflektierend ausgebildet und entlang der optischen Achse so beabstandet, dass das näherungsweise kollimierte Eintrittsbündel von der Innenseite der Mantelfläche des Kegels auf die Innenseite der Mantelfläche des Kegelstumpfes gelenkt wird.

Mittels der reflektierenden Mantelflächen des Kegelstumpfs und des Kegels wird ein Eintrittsbündel von Lichtstrahlen, die näherungsweise kollimiert zur optischen Achse sind und eine um diese optische Achse rotationssymmetrisch gaußförmig verteilte Bestrahlungsstärke aufweisen, in ein ringförmig auf die asphärische Grenzfläche auftreffendes Bündel von zur optischen Achse näherungsweise parallelen Lichtstrahlen umgeformt. Die asphärische Grenzfläche fokussiert dieses ringförmige Bündel von Lichtstrahlen in einem Fokusbereich, der um den Brennpunkt der der asphärischen Grenzfläche zugeordneten plankonvexen asphärischen Sammellinse liegt. Dabei ist die Bestrahlungsstärke in der Brennebene, die den Brennpunkt enthält und welche im Brennpunkt von der optischen Achse durchstoßen wird, rotationssymmetrisch zum Brennpunkt verteilt.

Ein Vorteil des erfindungsgemäßen optischen Elements besteht darin, dass die Bestrahlungsstärkeverteilung enger um den Brennpunkt verteilt ist als bei Anordnungen optischer Elemente nach dem Stand der Technik. Der Wirksamkeitsbereich, in dem die Bestrahlungsstärkeverteilung in der Brennebene eine gewisse vorbestimmte Mindestbestrahlungsstärke überschreitet, ist als Kreisfläche mit einem kleineren Durchmesser ausgebildet, als dies mit Anordnungen nach dem Stand der Technik möglich ist. Dadurch ist bei Anwendungen, die auf einem physikalischen Effekt beruhen, der im Wesentlichen nur oberhalb einer solchen Mindestbestrahlungsstärke auftritt, eine höhere Genauigkeit erzielbar. Alternativ ist es auch möglich, innerhalb eines Wirksamkeitsbereichs, der auch mit Anordnungen nach dem Stand der Technik erreichbar ist, eine höhere Bestrahlungsstärke zu erzeugen. Damit kann eine Mindestbestrahlungsstärke für physikalische Effekte erreicht werden, die mit bisher bekannten Anordnungen nicht oder nur unzureichend erzielbar war.

Ein weiterer Vorteil des erfindungsgemäßen einstückigen optischen Elements besteht in seiner kompakten, Platz sparenden Bauform. Mit der durch die Reflexion an den Mantelflächen des Kegels und des Kegelstumpfes bewirkten Faltung des Strahlengangs kann eine besonders geringe Baulänge entlang der optischen Achse erzielt werden. Da die Lage der reflektierenden und brechenden Grenzflächen durch die Bauform des einstückigen optischen Elements vorgebbar ist, erübrigt sich in vorteilhafter Weise eine Justierung nach der Fertigung.

Bei einer Ausführungsform des einstückigen optischen Elements sind die Mantelflächen des Kegelstumpfes und des Kegels nach innen verspiegelt. Eine solche Verspiegelung lässt sich in vorteilhafter Weise mit bekannten Verfahren kostengünstig durchführen.

Bei einer Ausführungsform des einstückigen optischen Elements ist der Öffnungswinkel des Kegels kleiner als ein Winkel von einhundertachtzig Grad, vermindert um das Doppelte des Grenzwinkels der Totalreflexion für einen Übergang vom Material des optischen Elements nach Luft. Durch den so gewählten Öffnungswinkel des Kegels wird eine Totalreflexion der näherungsweise zur optischen Achse kollimierten, auf die Innenseite der Mantelfläche des Kegels auftreffenden Lichtstrahlen bewirkt. In gleicher Weise wird eine Totalreflexion der von der Innenseite der Mantelfläche des Kegels auf die Innenseite der Mantelfläche des Kegelstumpfs gelenkten Lichtstrahlen bewirkt. Mittels Totalreflexion ist eine Strahlumlenkung mit geringerem Lichtverlust erzielbar als an einer verspiegelten Grenzfläche. In vorteilhafter Weise wird bei dieser Ausführungsform der Erfindung somit eine besonders hohe Lichtausbeute im Fokusbereich erzielt.

Bei einer Ausführungsform des einstückigen optischen Elements ist auf der Deckfläche des Kegelstumpfs ein diffraktiv-optisches Element angeordnet. Die Transmissionfunktion dieses diffraktiv-optischen Elements ist so gewählt, dass die Gruppengeschwindigkeitsdispersion eines ultrakurzen Laserpulses entlang des Strahlengangs durch das optische Element näherungsweise minimiert wird.

Optional kann die Transmissionsfunktion dieses diffraktiv-optischen Elements zudem so gewählt sein, dass Dispersionen höherer Ordnung für einen solchen ultrakurzen Laserpuls minimiert werden. In vorteilhafter Weise wird dadurch die zeitliche Länge und/oder die Verzerrung der Pulsform eines solchen ultrakurzen Laserpulses im Fokusbereich des optischen Elements begrenzt oder minimiert.

Bei einem Verfahren zur Fokussierung eines näherungsweise kollimierten Eintrittsbündels mit einem einstückigen optischen Element ist innerhalb des Fokusbereichs eine Bestrahlungsstärke oberhalb einer Mindestbestrahlungsstärke für einen physikalischen Effekt erzielbar, wobei dieser physikalische Effekt bei einer Bestrahlungsstärke unterhalb des Bestrahlungsstärkegrenzwerts näherungsweise vollständig ausbleibt. In vorteilhafter Weise ist es somit möglich, diesen physikalischen Effekt innerhalb eines Wirksamkeitsbereichs mit näherungsweise kreisförmigem Querschnitt und einem im Vergleich zu Verfahren nach dem Stand der Technik besonders kleinen Durchmesser zu erzielen. Damit sind Bearbeitungsverfahren mit besonders hoher Genauigkeit und/oder Auflösung möglich.

Beispielsweise ist es möglich, dass der Effekt auf einer Polymerisation beruht, die bei einem oder oberhalb eines Bestrahlungsstärkegrenzwerts näherungsweise vollständig erfolgt und unterhalb dieses Bestrahlungsstärkegrenzwerts nahezu ausbleibt. In vorteilhafter Weise können somit mittels eines erfindungsgemäßen optischen Elements solche sogenannten 3D-Druckverfahren, welche auf einer über Bestrahlung ausgelösten Polymerisation beruhen, mit einer besonders hohen Auflösung ausgeführt werden.

In einer weiteren Ausführungsform des Verfahrens ist es möglich, oberhalb eines Bestrahlungsstärkegrenzwerts einen optischen Durchbruch in einem besonders kleinen und besonders genau begrenzten Bereich in einem bearbeiteten Material auszulösen. Damit sind beispielsweise aus dem Stand der Technik bekannte Verfahren zur laserinduzierten Kavitation, beispielsweise zum Auftrennen von kornealem Gewebe oder Linsengewebe bei einer Laser-in-situ-Keratomileusis (LASIK) Operation mittels ultrakurzer Laserpulse, besonders genau und schonend durchführbar. Es sind jedoch auch zahlreiche andere, aus dem Stand der Technik bekannte Verfahren zur Laserchirurgie mit verbesserter Genauigkeit und Auflösung ausführbar.

In einer weiteren Ausführungsform des Verfahrens wird oberhalb eines Bestrahlungsstärkegrenzwerts ein fester Werkstoff aufgeschmolzen. Hiermit sind beispielsweise aus dem Stand der Technik bekannte Verfahren des Laserschweißens oder Laserschneidens besonders genau und/oder mit besonders schmalen Schweißnähten oder Trennfugen möglich.

Bei einer Anordnung zur Durchführung eines Verfahrens zur Fokussierung eines näherungsweise kollimierten Strahlenbündels mit einem erfindungsgemäßen optischen Element wird das optische Element eintrittsseitig mit näherungsweise kollimiertem Licht beleuchtet. In vorteilhafter Weise können hierzu Laserquellen verwendet werden, die kostengünstig und leistungsstark verfügbar sind.

Bei einer Ausführungsform einer solchen Anordnung ist das optische Element austrittsseitig mit dem Fokusbereich durch eine Immersionsflüssigkeit mit einem Brechungsindex oberhalb von 1 verbunden, die eine Vergrößerung der numerischen Apertur des optischen Elements bewirkt. Dadurch wird bei unveränderter Geometrie und Bestrahlungsstärke der eintrittsseitigen Beleuchtung des optischen Elements eine Verengung des Fokusbereichs und somit eine erhöhte Bestrahlungsstärke in der Brennebene und/oder ein verkleinerter Querschnitt des Wirksamkeitsbereichs erzielt. Ebenso ist es möglich, bei unverändertem Fokusbereich den Querschnitt des Eintrittsbündels von Lichtstrahlen zu vergrößern und somit eine höhere Lichtenergie in das optische Element einzukoppeln und folglich eine höhere Bestrahlungsstärke in der Brennebene zu erzielen. Weiterhin ist es möglich, bei unverändertem Fokusbereich und unverändertem Querschnitt des Eintrittsbündels die Ausdehnung des optischen Elements senkrecht zur optischen Achse zu verringern und somit ein kostengünstiger und einfacher herstellbares optisches Element zu verwenden.

Bei einer weiteren Ausführungsform einer solchen Anordnung ist zwischen dem erfindungsgemäßen optischen Element und dem Fokusbereich ein optisch durchlässiges Schutzelement angeordnet, das in vorteilhafter Weise eine Verschmutzung oder mechanische Beeinträchtigung des optischen Elements, insbesondere der austrittsseitigen Mantelfläche des Kegels und der austrittsseitigen asphärischen Grenzfläche, verhindert. Beispielsweise kann ein solches Schutzelement die Ablagerung von verdampftem oder verspritztem Material auf den austrittsseitigen Flächen des optischen Elements beim Laserschweißen oder Laserschneiden vermeiden oder vermindern.

Bei einer weiteren Ausbildung dieser Ausführungsform der Erfindung ist das Schutzelement wechselbar. In vorteilhafter Weise kann damit bei besonders verschmutzungsintensiven Bearbeitungsverfahren ein verschmutztes Schutzelement mit geringem Aufwand gegen ein neues oder gereinigtes Schutzelement getauscht werden oder für eine Reinigung entnommen werden. Dadurch sind eine Bearbeitung mit im Wesentlichen dauerhaft unverminderter Bestrahlungsstärke und zugleich eine verringerte Rüst- oder Wartungszeit erzielbar.

Ausführungsbeispiele der Erfindung werden im Folgenden anhand von Zeichnungen näher erläutert.

Darin zeigen:

Figur 1    schematisch den Strahlverlauf durch eine plankonvexe asphärische Linse,

Figur 2    schematisch das Profil der Bestrahlungsstärke durch einen Fokusbereich entlang des Abstands von der optischen Achse und

Figur 3    schematisch den Strahlverlauf durch ein einstückiges optisches Element zur Strahlfokussierung.

Einander entsprechende Teile sind in allen Figuren mit den gleichen Bezugszeichen versehen.

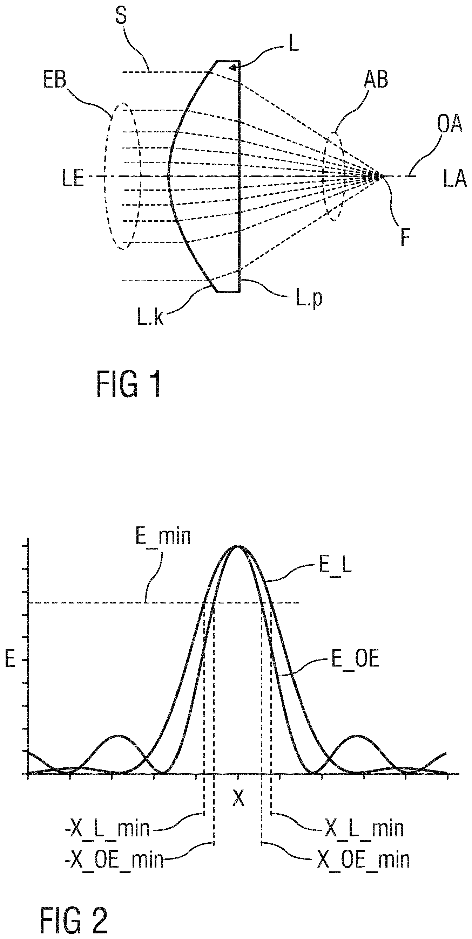

**Figur 1** zeigt schematisch den Verlauf von Lichtstrahlen S durch eine plankonvexe asphärische Linse L mit einer optischen Achse OA nach dem Stand der Technik. Ein Eintrittsbündel EB zur optischen Achse OA kollimierter Eingangsstrahlen tritt am Lichteintritt LE in die plankonvexe asphärische Linse L an deren konvexer Fläche L.k ein. Ein Austrittsbündel AB konvergenter Ausgangsstrahlen tritt am Lichtaustritt LA an der planen Fläche L.p der plankonvexen asphärischen Linse L wieder aus. Die konvexe Fläche L.k ist rotationssymmetrisch zur optischen Achse OA so geformt, dass sich die Ausgangsstrahlen nach den Gesetzen der Strahlenoptik in einem austrittsseitig der plankonvexen asphärischen Linse L gelegenen Fokus oder Brennpunkt F schneiden würden. Die wegen der Wellennatur des Lichtes zu berücksichtigende Beugung bewirkt jedoch, dass entgegen den Gesetzen der Strahlenoptik nicht der gesamte, auf alle eingehenden Lichtstrahlen S verteilte Strahlungsfluss im Brennpunkt F konzentriert wird, sondern vielmehr rotationssymmetrisch zur optischen Achse OA in einer Brennebene verteilt wird, wobei die Brennebene die Ebene ist, die den Brennpunkt F enthält und in diesem senkrecht von der optischen Achse OA durchstoßen wird.

Figur 2 zeigt schematisch die Verteilung der Bestrahlungsstärke in der Brennebene entlang einer beliebigen gedachten Linie durch den Brennpunkt F als Bestrahlungsstärkeprofil, wobei auf der Positionsachse X der Abstand einer Position x zum Brennpunkt F und auf der Bestrahlungsstärkeachse E der Wert der Bestrahlungsstärke aufgetragen ist, der in diesem Abstand x gemessen wird. In gleichem Abstand, aber in entgegengesetzter Richtung vom Brennpunkt F gelegene Positionen entlang der gedachten Linie durch den Brennpunkt F tragen entgegengesetzte Vorzeichen.

Wenn eine plankonvexe asphärische Linse L mit einem Eintrittsbündel EB kollimierter Strahlen S beleuchtet wird, wie in Figur 1 schematisch dargestellt, und wenn dieses Eintrittsbündel EB eine um die optische Achse OA rotationssymmetrische gaußförmige Bestrahlungsstärkeverteilung aufweist, so ergibt sich in der Brennebene eine um die optische Achse OA rotationssymmetrische Bestrahlungsstärkeverteilung und ein Bestrahlungsstärkeprofil E_L mit einem Maximum an der Position x=0, also am Ort des Brennpunkts F, das von zwei Nullstellen umgeben ist. Aus der Rotationssymmetrie der Bestrahlungsstärkeverteilung relativ zur optischen Achse OA folgt ein spiegelsymmetrischer Verlauf des Bestrahlungsstärkeprofils E_L relativ zur Senkrechten durch die Position x=0.

Wird für die Erzielung eines bestimmten physikalischen Effekts, beispielsweise für eine Polymerisation, für einen optischen Durchbruch oder für ein Aufschmelzen eines Werkstoffs, eine bestimmte Mindestbestrahlungsstärke E_min benötigt, so wird dieser physikalische Effekt in der Brennebene nur innerhalb eines Wirksamkeitskreises um die optische Achse OA erzielt, dessen Radius durch den Abstandswert x_L_min gegeben ist, an welchem die Mindestbestrahlungsstärke E_min vom Bestrahlungsstärkeprofil E_L gerade erreicht wird.

Die Lage der beiden das Maximum im Brennpunkt F umgebenden Nullstellen des Bestrahlungsstärkeprofils E_L ist durch die numerische Apertur der plankonvexen asphärischen Linse L bestimmt. Eine Vergrößerung der numerischen Apertur bewirkt ein Zusammenrücken dieser Nullstellen und somit, da die gesamte Bestrahlungsleistung als Fläche unter dem Bestrahlungsstärkeprofil E_L unverändert bleibt, einen höheres Maximum und einen steileren Abfall um dieses Maximum. Anordnungen und Verfahren nach dem Stand der Technik versuchen daher, zur Erreichung einer höheren Mindestbestrahlungsstärke E_min für die Erzielung eines physikalischen Effekts und/oder zur Verbesserung der Genauigkeit bei der Erzielung eines physikalischen Effekts die numerische Apertur der plankonvexen asphärischen Linse L zu vergrößern.

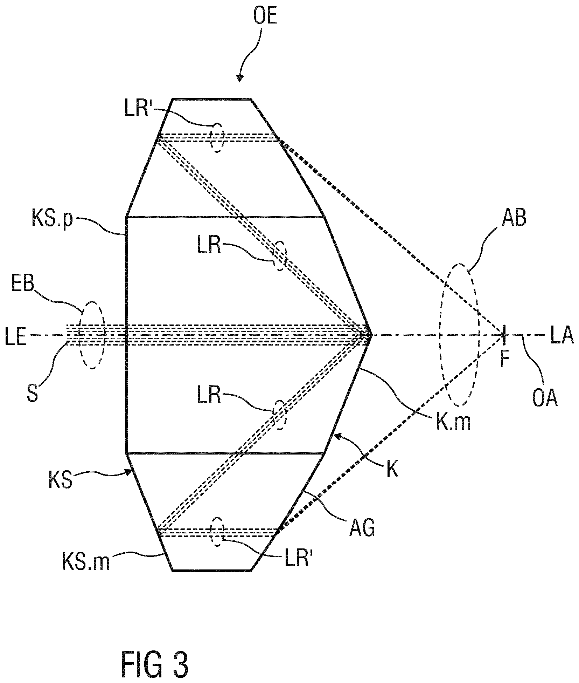

**Figur 3** zeigt schematisch den Strahlverlauf durch ein einstückiges optisches Element OE, das rotationssymmetrisch zu einer optischen Achse OA ausgebildet ist. Zur Eintrittsseite ES ist das optische Element OE durch einen Kegelstumpf KS abgegrenzt, der eine konische Mantelfläche KS.m aufweist, die zu einer planen Deckfläche KS.p zuläuft. Die konische Mantelfläche KS.m ist nach innen verspiegelt, so dass ein Lichtstrahl S, der aus dem Inneren des optischen Elements OE auf die konische Mantelfläche KS.m trifft, reflektiert wird. Die plane Deckfläche KS.p weist in Richtung der Eintrittsseite ES und ist zentriert und senkrecht zur optischen Achse OA ausgerichtet. Die plane Deckfläche KS.p stellt die Eintrittsluke des optischen Elements OE dar.

Zur Austrittsseite AS ist das optische Element OE durch einen zentralen Kegel K abgegrenzt, dessen Kegelspitze auf der optischen Achse OA liegt und in Richtung der Austrittsseite AS weist. Der Kegel K ist als Ergänzungskegel zum Kegelstumpf KS ausgebildet, mit anderen Worten: der Kegel K ergänzt den Kegelstumpf KS zu einem vollständigen Kegel K. Die Mantelfläche K.m des Kegels K ist nach innen verspiegelt, so dass ein Lichtstrahl S, der aus dem Inneren des optischen Elements OE auf die Mantelfläche K.m trifft, reflektiert wird.

Alternativ zur Verspiegelung der Mantelflächen K.m, KS.m des Kegels K und des Kegelstumpfs KS ist es möglich, dass in Abhängigkeit vom Brechungsindex des Materials für das optische Element OE ein Öffnungswinkel für den Kegel K, und somit auch für den Kegelstumpf KS, so gewählt wird, dass die Reflexion eines Lichtstrahls S an der Innenseite der Mantelfläche K.m des Kegels K wie auch an der Innenseite der Mantelfläche KS.m des Kegelstumpfs KS über Totalreflexion erfolgt.

Zur Austrittsseite AS ist das optische Element OE ferner durch eine zur optischen Achse OA rotationssymmetrische asphärische Grenzfläche AG abgegrenzt, die an den Kegel K anschließt und diesen einfasst. Im Bereich der asphärischen Grenzfläche AG, also außerhalb des Kegels K, stimmt die austrittsseitige Grenzfläche des optischen Elements OE überein mit der konvexen Fläche L.k einer gedachten plankonvexen asphärischen Linse L, deren Brennpunkt austrittsseitig auf der optischen Achse OA liegt.

Es ist möglich, dass die plane Deckfläche KS.p und/oder die asphärische Grenzfläche AG entspiegelt sind, um Transmissionsverluste beim Ein- und/oder Austritt von Licht in und/oder aus dem optischen Element OE zu begrenzen.

Im Folgenden wird der Strahlverlauf durch das optische Element OE erklärt. Ein Eintrittsbündel EB zur optischen Achse OA kollimierter Strahlen S mit einem kreisförmigen Querschnitt durchstößt die plane Deckfläche KS.p ohne Richtungsänderung und wird an der Mantelfläche K.m des Kegels K nach innen reflektiert. Aufgrund der Neigung der Mantelfläche K.m zur optischen Achse OA weist das Strahlenbündel nach der Reflexion an der Mantelfläche K.m einen ringförmigen Querschnitt konzentrisch zur optischen Achse auf, wobei sich der innere und der äußere Durchmesser des Lichtrings LR mit diesem ringförmigen Querschnitts in Richtung des Strahlverlaufs, also in Richtung zur Mantelfläche KS.m des Kegelstumpfs KS gleichförmig aufweiten.

Der aufgeweitete Lichtring LR trifft auf die Innenseite der Mantelfläche KS.m des Kegelstumpfes KS unter demselben Einfallswinkel auf, unter dem die kollimierten, zur optischen Achse OA parallelen Strahlen S auf die Innenseite der Mantelfläche K.m des Kegels K auftreffen, da der Kegel K einen Ergänzungskegel zum Kegelstumpf KS bildet. Folglich wird der aufgeweitete Lichtring LR an der Innenseite der Mantelfläche K.m in ein Bündel zur optischen Achse kollimierter Lichtstrahlen S mit ringförmigem Querschnitt in Richtung der asphärischen Grenzfläche AG reflektiert. Dieser reflektierte Lichtring LR' trifft somit mit unverändertem ringförmigem Querschnitt auf die asphärische Grenzfläche AG.

Die asphärische Grenzfläche AG ist rotationssymmetrisch so gekrümmt, dass sich zur optischen Achse OA kollimiert auftreffende Strahlen S nach den Gesetzen der geometrischen Optik in einem austrittsseitigen Brennpunkt F treffen würden.

Tatsächlich ergibt sich auch hier, aufgrund der Beugung des Lichtes, eine Verteilung der Bestrahlungsstärke in der Brennebene, welche nicht in einem infinitesimal kleinen Brennpunkt F konzentriert ist, sondern rotationssymmetrisch über diesen hinausreicht. Figur 2 stellt schematisch das mit dem erfindungsgemäßen optischen Element OE erzielte Bestrahlungsstärkeprofil E_OE neben dem Bestrahlungsstärkeprofil E_L für eine reine plankonvexe asphärische Linse L nach dem Stand der Technik ohne Verwendung von Axikons A1, A2 zur Strahlaufweitung dar, wobei beide Anordnungen die gleiche numerische Apertur aufweisen.

Wie aus Figur 2 erkennbar, ist das zentrale Maximum, also der Bereich zwischen den beiden das Maximum einschließenden Minima oder Nullstellen, des mit dem optischen Element OE erzielten Bestrahlungsstärkeprofils E_OE schmaler als das zentrale Maximum des Bestrahlungsstärkeprofils E_L nach dem Stand der Technik. Insbesondere ist auch der Bereich, in dem die vorbestimmte Mindestbestrahlungsstärke E_min überschritten wird, mit einem durch das optische Element OE geformten Strahl schmaler und entspricht einem Kreis um die optische Achse OA, dessen Radius durch den Abstandswert x_SF_min gegeben ist, an welchem die Mindestbestrahlungsstärke E_min vom Bestrahlungsstärkeprofil E_OE gerade erreicht wird.

In vorteilhafter Weise kann mit dem optischen Element OE daher eine genauere Bearbeitung eines Werkstücks oder eines Materials erfolgen, wenn diese Bearbeitung auf einem physikalischen Effekt beruht, der nur oberhalb einer solchen vorbestimmten Mindestbestrahlungsstärke E_min ausgelöst wird, ohne dass hierzu die numerische Apertur mit den aus dem Stand der Technik bekannten nachteiligen Auswirkungen vergrößert werden muss.

Für den Fachmann ist offensichtlich, dass sich für ein Eintrittsbündel EB, das nicht ausschließlich exakt kollimierte Strahlen S umfasst, sondern leicht divergierende oder konvergierende, im Allgemeinen also leicht, beispielsweise weniger als 5 Grad, gegenüber der optischen Achse OA geneigte Strahlen S, ein Bestrahlungsstärkeprofil ergibt, das dem dargestellten Verlauf des Bestrahlungsstärkeprofils E_OE prinzipiell, insbesondere hinsichtlich der Höhe und Breite des zentralen Maximums, ähnlich ist. Somit ist das optische Element OE in vorteilhafter Weise auch für nicht exakt kollimierte Lichtquellen einsetzbar.

<u>BEZUGSZEICHENLISTE</u>

| S | Lichtstrahl, Strahl |
|---|---|
| L | plankonvexe asphärische Linse |
| L.p | plane Fläche der plankonvexen asphärischen Linse |
| L.k | konvexe Fläche der plankonvexen asphärischen Linse |
| OA | optische Achse |
| EB | Eintrittsbündel |
| AB | Austrittsbündel |
| LE | Lichteintritt, Eintrittsseite |
| LA | Lichtaustritt, Austrittsseite |
| F | Brennpunkt, Fokus |
| X | Positionsachse |
| E | Bestrahlungsstärkeachse |
| E_L | Bestrahlungsstärkeprofil einer plankonvexen asphärischen Linse |
| E_OE | Bestrahlungsstärkeprofil eines Strahlformers |
| E_min | Mindestbestrahlungsstärke |
| OE | optisches Element |
| KS | Kegelstumpf |
| KS.m | Mantelfläche des Kegelstumpfs |
| KS.p | Deckfläche des Kegelstumpfs |
| K | Kegel |
| K.m | Mantelfläche des Kegels |
| AG | asphärische Grenzfläche |
| LR, LR' | Lichtring |

**Patentansprüche**

1. Einstückiges optisches Element (OE) aus optisch transparentem Material zur Fokussierung eines Eintrittsbündels (EB) kollimierter Strahlen (S) um eine optische Achse (OA) in einem Fokusbereich um einen Brennpunkt (F), eintrittsseitig begrenzt durch einen zur optischen Achse (OA) zentrierten Kegelstumpf (KS) mit zum Lichteintritt (LE) weisender Deckfläche (KS.p), **dadurch gekennzeichnet, dass** das optische Element (OE) austrittsseitig durch einen Kegel (K) mit zum Lichtaustritt (LA) weisender Kegelspitze auf der optischen Achse (OA) und eine um den Kegel (K) angeordnete rotationssymmetrische asphärische Grenzfläche (AG) begrenzt ist, wobei der Kegel (K) als sich mit dem Kegelstumpf (KS) zu einem Kegel ergänzender Ergänzungskegel ausgebildet ist und wobei die asphärische Grenzfläche (AG) als Teilfläche der konvexen

EP 3 051 325 B1

Fläche (L.k) einer plankonvexen asphärischen Sammellinse (L) mit einem hinter dem Lichtaustritt (LA) des optischen Elements (OE) angeordneten Brennpunkt (F) auf der optischen Achse (OA) ausgebildet ist und wobei die Mantelflächen (KS.m, K.m) des Kegelstumpfs (KS) und des Kegels (K) nach innen reflektierend und entlang der optischen Achse (OA) so beabstandet sind, dass das kollimierte Eintrittsbündel (EB) von der Innenseite der Mantelfläche (K.m) des Kegels (K) auf die Innenseite der Mantelfläche (KS.m) des Kegelstumpfes (KS) gelenkt wird.

2. Einstückiges optisches Element (OE) nach Anspruch 1, **dadurch gekennzeichnet, dass** die Mantelflächen (KS.m, K.m) des Kegelstumpfes (KS) und des Kegels (K) nach innen verspiegelt sind.

3. Einstückiges optisches Element (OE) nach Anspruch 1, **dadurch gekennzeichnet, dass** der Öffnungswinkel des Kegels (K) kleiner als ein Winkel von einhundertachtzig Grad vermindert um das Doppelte des Grenzwinkels der Totalreflexion für einen Übergang vom optisch durchlässigen Material des optischen Elements (OE) nach Luft ist.

4. Einstückiges optisches Element (OE) nach einem der vorhergehenden Ansprüche, **dadurch gekennzeichnet, dass** auf der Deckfläche (KS.p) des Kegelstumpfs (KS) ein diffraktiv-optisches Element (OE) angeordnet ist, dessen Transmissionsfunktion so gewählt ist, dass die Gruppengeschwindigkeitsdispersion eines ultrakurzen Laserpulses entlang des Strahlengangs durch das optische Element (OE) minimiert werden.

5. Einstückiges optisches Element (OE) nach Anspruch 4, **dadurch gekennzeichnet, dass** die Transmissionsfunktion des diffraktiv-optischen Elements (OE) so gewählt ist, dass die Gruppengeschwindigkeitsdispersion und Dispersionen höherer Ordnung eines ultrakurzen Laserpulses entlang des Strahlengangs durch das optische Element (OE) minimiert werden.

6. Verfahren zur Fokussierung eines Eintrittsbündels (EB) von kollimierten Strahlen (S) mit einem einstückigen optischen Element (OE) nach einem der Ansprüche 1 bis 4, **dadurch gekennzeichnet, dass** innerhalb des Fokusbereichs um den Brennpunkt (F) eine Bestrahlungsstärke oberhalb einer Mindestbestrahlungsstärke (E_min) für einen physikalischen Effekt erzielbar ist, der außerhalb des Fokusbereichs vollständig ausbleibt.

7. Verfahren nach Anspruch 6, **dadurch gekennzeichnet, dass** der physikalische Effekt auf einer Polymerisation oberhalb der Mindestbestrahlungsstärke (E_min) beruht.

8. Verfahren nach Anspruch 6, **dadurch gekennzeichnet, dass** der physikalische Effekt auf einem optischen Durchbruch oberhalb der Mindestbestrahlungsstärke (E_min) beruht.

9. Verfahren nach Anspruch 6, **dadurch gekennzeichnet, dass** der physikalische Effekt auf der Schmelze eines festen Werkstoffs oberhalb der Mindestbestrahlungsstärke (E_min) beruht.

10. Verfahren nach einem der Ansprüche 6 bis 9, **dadurch gekennzeichnet, dass** das einstückige optische Element (OE) eintrittsseitig mit kollimiertem Licht beleuchtet wird.

11. Anordnung mit einem optischen Element (OE) nach einem der Ansprüche 1 bis 5, **dadurch gekennzeichnet, dass** das einstückige optische Element (OE) mit dem Fokusbereich um den Brennpunkt (F) durch eine Immersionsflüssigkeit mit einem Brechungsindex von größer als 1 verbunden ist.

12. Anordnung nach Anspruch 11, **dadurch gekennzeichnet, dass** zwischen dem einstückigen optischen Element (OE) und dem Fokusbereich ein optisch durchlässiges Schutzelement angeordnet ist.

13. Anordnung nach Anspruch 12, **dadurch gekennzeichnet, dass** das Schutzelement auswechselbar ist.

## Claims

1. A one-piece optical element (OE), made of an optically transparent material, for focusing an input bundle (EB) of collimated rays (S) around an optical axis (OA) in a focal region around a focal point (F), bounded on the entry side by a truncated cone (KS), centered relative to the optical axis (OA), with a top surface (KS.p) pointing toward the light entry (LE), **characterized in that** the optical element (OE) is bounded on the exit side by a cone (K) with a cone tip, pointing toward the light exit (LA), on the optical axis (OA) and an aspheric boundary surface (AG) arranged rotationally symmetrically around the cone (K), wherein the cone (K) is formed as a complementary cone complementary with the truncated cone (KS) to form a cone and wherein the aspheric boundary surface (AG) is formed as a partial surface of the convex surface (L.k) of a plano-convex aspheric converging lens (L) with a focal point (F), located behind the light exit (LA) of the optical element (OE), on the optical axis (OA) and wherein the lateral surfaces (KS.m, K.m) of the truncated cone (KS) and of the cone (K) are inwardly reflecting and spaced apart along the optical axis (OA) so that the collimated input bundle (EB) is directed from the inner side of

7

the lateral surface (K.m) of the cone (K) to the inner side of the lateral surface (KS.m) of the truncated cone (KS).

2. The one-piece optical element (OE) according to claim 1, **characterized in that** the lateral surfaces (KS.m, K.m) of the truncated cone (KS) and of the cone (K) are mirrored inwardly.

3. The one-piece optical element (OE) according to claim 1, **characterized in that** the opening angle of the cone (K) is smaller than an angle of 180 degrees, reduced by double the limiting angle of the total reflection for a transition from the optically transmissive material of the optical element (OE) to air.

4. The one-piece optical element (OE) according to one of the preceding claims, **characterized in that** a diffractive optical element (OE), whose transmission function is selected so that the group velocity dispersion of an ultrashort laser pulse along the ray path through the optical element (OE) is minimized, is located on the top surface (KS.p) of the truncated cone (KS).

5. The one-piece optical element (OE) according to claim 4, **characterized in that** the transmission function of the diffractive optical element (OE) is selected so that the group velocity dispersion and higher-order dispersions of an ultrashort laser pulse along the ray path through the optical element (OE) are minimized.

6. A method for focusing an input bundle (EB) of collimated rays (S) with a one-piece optical element (OE) according to one of claims 1 to 4, **characterized in that** an irradiance above a minimum irradiance (E_min) can be achieved within the focal region around the focal point (F) for a physical effect that is completely absent outside the focal region.

7. The method according to claim 6, **characterized in that** the physical effect is based on a polymerization above the minimum irradiance (E_min).

8. The method according to claim 6, **characterized in that** the physical effect is based on an optical perforation above the minimum irradiance (E_min).

9. The method according to claim 6, **characterized in that** the physical effect is based on the melting of a solid material above the minimum irradiance (E_min).

10. Method according to one of claims 6 to 9, **characterized in that** the one-piece optical element (OE) is illuminated with collimated light on the entry side.

11. A system with an optical element (OE) according to one of the claims 1 to 5, **characterized in that** the one-piece optical element (OE) is connected to the focal region around the focal point (F) by an immersion liquid with a refractive index greater than 1.

12. The system according to claim 10 or 11, **characterized in that** an optically transmissive protective element is disposed between the one-piece optical element (OE) and the focal region.

13. The system according to claim 12, **characterized in that** the protective element can be exchanged.

**Revendications**

1. Élément optique (OE) monobloc en matériau optiquement transparent destiné à concentrer un faisceau d'entrée (EB) de rayons (S) collimatés autour d'un axe optique (OA) dans une zone de concentration autour d'un foyer (F), délimité du côté de l'entrée par un cône tronqué (KS) centré par rapport à l'axe optique (OA) et pourvu d'une surface de recouvrement (KS.p) dirigée vers l'entrée de lumière (LE), **caractérisé en ce que** l'élément optique (OE) est limité du côté de la sortie par un cône (K) ayant une pointe de cône dirigée vers la sortie de lumière (LA) sur l'axe optique (OA) et une surface de séparation (AG) asphérique à symétrie rotationnelle disposée autour du cône (K), le cône (K) étant réalisé sous la forme d'un cône qui se complète avec le cône tronqué (KS) pour former un cône et la surface de séparation (AG) asphérique étant réalisée sous la forme d'une surface partielle de la surface convexe (L.k) d'une lentille de convergence (L) asphérique plan-convexe ayant un foyer (F) disposé derrière la sortie de lumière (LA) de l'élément optique (OE) sur l'axe optique (OA) et les surfaces d'enveloppe (KS.m, K.m) du cône tronqué (KS) et du cône (K) étant réfléchissantes vers l'intérieur et espacées le long de l'axe optique (OA) de telle sorte que le faisceau d'entrée (EB) collimaté est dévié du côté intérieur de la surface d'enveloppe (K.m) du cône (K) sur le côté intérieur de la surface d'enveloppe (KS.m) du cône tronqué (KS).

2. Élément optique (OE) monobloc selon la revendication 1, **caractérisé en ce qu'**une couche réfléchissante vers l'intérieur est appliquée sur les surfaces d'enveloppe (KS.m, K.m) du cône tronqué (KS) et du cône (K).

3. Élément optique (OE) monobloc selon la revendication 1, **caractérisé en ce que** l'angle d'ouverture du cône (K) est inférieur à un angle de cent quatre-vingts degrés diminué du double de l'angle limite de la réflexion totale pour une transition du matériau optiquement transparent de l'élément optique (OE) vers l'air.

4. Élément optique (OE) monobloc selon l'une des revendications précédentes, **caractérisé en ce que** sur la surface de recouvrement (KS.p) du cône tronqué (KS) est disposé un élément optique diffractif (OE) dont la fonction de transmission est choisie de telle sorte que la dispersion de la vitesse de propagation de groupe d'une impulsion laser ultra-courte le long du trajet de rayon à travers l'élément optique (OE) est réduite au minimum.

5. Élément optique (OE) monobloc selon la revendication 4, **caractérisé en ce que** la fonction de transmission de l'élément optique diffractif (OE) est choisie de telle sorte que la dispersion de la vitesse de propagation de groupe et les dispersions d'ordre supérieur d'une impulsion laser ultra-courte le long du trajet de rayon à travers l'élément optique (OE) sont réduites au minimum.

6. Procédé de concentration d'un faisceau d'entrée (EB) de rayons (S) collimatés avec un élément optique (OE) monobloc selon l'une des revendications 1 à 4, **caractérisé en ce qu'**une intensité d'irradiation supérieure à une intensité d'irradiation minimale (E_min) peut être obtenue à l'intérieur de la zone de concentration autour du foyer (F) pour un effet physique qui fait totalement défaut en-dehors de la zone de concentration.

7. Procédé selon la revendication 6, **caractérisé en ce que** l'effet physique s'appuie sur une polymérisation au-dessus de l'intensité d'irradiation minimale (E_min).

8. Procédé selon la revendication 6, **caractérisé en ce que** l'effet physique s'appuie sur une rupture optique au-dessus de l'intensité d'irradiation minimale (E_min).

9. Procédé selon la revendication 6, **caractérisé en ce que** l'effet physique s'appuie sur la fusion d'un matériau solide au-dessus de l'intensité d'irradiation minimale (E_min).

10. Procédé selon l'une des revendications 6 à 9, **caractérisé en ce que** l'élément optique (OE) monobloc est éclairé du côté de l'entrée avec de la lumière collimatée.

11. Arrangement comprenant un élément optique (OE) selon l'une des revendications 1 à 5, **caractérisé en ce que** l'élément optique (OE) monobloc est relié à la zone de concentration autour du foyer (F) par un liquide d'immersion ayant un indice de réfraction supérieur à 1.

12. Arrangement selon la revendication 11, **caractérisé en ce qu'**un élément de protection optiquement transparent est disposé entre l'élément optique (OE) monobloc et la zone de concentration.

13. Arrangement selon la revendication 12, **caractérisé en ce que** l'élément de protection est remplaçable.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100309566 A1
- JP 2000206411 A